# EUROPÄISCHE PATENTSCHRIFT

(11) **EP 3 392 535 B1**
(45) Veröffentlichungstag und Bekanntmachung des Hinweises auf die Patenterteilung: **08.07.2020**
(21) Anmeldenummer: 18166128.1
(22) Anmeldetag: 06.04.2018
(51) Int. Cl.: F16K 3/18, F16F 1/12

(54) **PLATTENSCHIEBER, FIXIERELEMENT UND VERFAHREN ZUR MONTAGE EINES PLATTENSCHIEBERS**
GATE VALVE, FIXING ELEMENT AND METHOD FOR MOUNTING A GATE VALVE
ROBINET-VANNE, ÉLÉMENT DE FIXATION ET PROCÉDÉ DE MONTAGE D'UN ROBINET-VANNE

(30) Priorität: 21.04.2017 DE 102017108576
(43) Veröffentlichungstag der Anmeldung: 24.10.2018
(73) Patentinhaber: Z & J Technologies GmbH, 52355 Düren (DE)
(72) Erfinder: GANDELHEIDT, Markus, 52477 Alsdorf (DE); HEIDEN, Ralf, 52459 Inden (DE); PÜTZ, Robert, 52353 Düren (DE)
(74) Vertreter: Popp, Eugen

(56) Entgegenhaltungen:
- DE-A1- 19 723 962
- US-A- 3 572 678
- US-A- 3 951 391
- US-A1- 2008 060 511
- US-A1- 2015 308 536

## Beschreibung

Die Erfindung betrifft einen Plattenschieber mit den Merkmalen des Oberbegriffs des Anspruchs 1. Ein Plattenschieber, der die Merkmale des Oberbegriffs des Anspruchs 1 aufweist, ist beispielsweise aus der DE 20 2016 102 559 U1 bekannt. Die Erfindung betrifft ferner ein Fixierelement und ein Verfahren zur Montage eines Plattenschiebers.

Zum Absperren großer Leitungen in Industrieanlagen, insbesondere in chemischen und petrochemischen Anlagen, verwendet man Plattenschieber mit Schieberplatten, deren Durchmesser im Wesentlichen dem Durchmesser der abzuschließenden Leitung entspricht.

Neben Einplattenschiebern mit einer einzigen Schieberplatte sind Doppelplattenschieber mit zwei Schieberplatten bekannt, die in einem Plattenkorb angeordnet sind. Bei Doppelplattenschiebern werden die Schieberplatten in der Absperrstellung durch eine Keilanordnung zwischen den Schieberplatten auseinandergedrückt und an die entsprechenden Gehäusedichtsitze gepresst. Die Keilanordnung wird durch die Schieberstange betätigt, die den Plattenkorb mit den Schieberplatten bewegt. Um die Anpresskraft während des Öffnungs- und Schließvorgangs zu verringern, wird die Keilanordnung mit einer Lösekraft beaufschlagt, die durch ein Federelement aufgebracht wird, das zwischen dem Plattenkorb und der Schieberstange angeordnet ist und die Keilanordnung entlastet.

Die Herausforderung bei Plattenschiebern besteht darin, einerseits eine gute Dichtwirkung zu erzeugen und andererseits eine möglichst leichte Gängigkeit beim Öffnen und Schließen zu ermöglichen, damit der Schieber sicher und zuverlässig betätigt werden kann. Die leichte Gängigkeit zusammen mit einem geringen Verschleiß der Schieberplatte, bzw. der Schieberplatten wird durch das Federelement erreicht, das die Spreizwirkung und damit die Anpresskraft während der Bewegung der Schieberplatte, bzw. der Schieberplatten reduziert. Die Anpresskraft wird in Abhängigkeit der Druckverhältnisse eingestellt, die in den an den Schieber angeschlossenen Rohrleitungen herrschen, um eine ausreichende Dichtigkeit zu erreichen.

Der Schieber gemäß der eingangs genannten DE 20 2016 102 559 U1 weist eine Anpressplatte und ein Klemmelement auf. Die Anpressplatte ist zur gleichmäßigen Kraftübertragung zwischen dem Federelement und dem Klemmelement angeordnet, das üblicherweise aus Stahl gefertigt ist. Das Klemmelement ist fest auf der Schieberstange positioniert, fixiert die Anpressplatte und überträgt die Kraft zwischen Schieberstange und Federelement.

DE 197 23 962 A1 offenbart einen Plattenschieber für Industrieanlagen nach dem Oberbegriff des Anspruches 1.

Bei bestimmten thermischen Belastungen und unter einer wasserstoffhaltigen Atmosphäre kann das Material des Klemmelements verspröden, so dass es zur Rißbildung neigt. Dadurch sinkt die Klemmkraft des Klemmelements. Zumindest die Gängigkeit des Schiebers wird beeinträchtigt.

Der Erfindung liegt daher die Aufgabe zu Grunde, einen Plattenschieber der eingangs genannten Art so zu verbessern, dass die Gängigkeit und Sicherheit des Plattenschiebers selbst unter kritischen thermischen und chemischen Situationen erhalten bleibt. Der Erfindung liegt ferner die Aufgabe zu Grunde, ein Fixierelement für einen Plattenschieber und ein Verfahren zur Montage eines Plattenschiebers anzugeben.

Erfindungsgemäß wird diese Aufgabe durch einen Plattenschieber nach Anspruch 1 gelöst. Mit Blick auf das Fixierelement wird diese Aufgabe durch den Gegenstand des Anspruchs 14 gelöst. Bezüglich des Verfahrens zur Montage eines Plattenschiebers wird diese Aufgabe durch den Gegenstand des Anspruchs 16 gelöst.

Die Erfindung beruht auf dem Gedanken, einen Plattenschieber für Industrieanlagen, insbesondere für chemische und petrochemische Anlagen, anzugeben. Dieser Plattenschieber umfasst eine Schieberstange, die in axialer Richtung bewegbar ist, wenigstens eine Schieberplatte zum Verschließen des Plattenschiebers und wenigstens ein Anpressorgan. Das Anpressorgan ist mit der Schieberstange verbunden und presst die Schieberplatte gegen einen Dichtsitz. Des Weiteren umfasst der Plattenschieber ein Federelement zur Beaufschlagung des Anpressorgans mit einer Lösekraft und ein Fixierelement, das auf der Schieberstange zur Kraftübertragung zwischen Schieberstange und Federelement angeordnet ist. Der erfindungsgemäße Plattenschieber umfasst als Fixierelement eine Fixierscheibe, welche die Schieberstange umgibt und formschlüssig mit der Schieberstange verbunden ist. Die Fixierscheibe umfasst mehrere Schei bensegmente.

Die Erfindung hat den Vorteil, dass die Position der Fixierscheibe auf der Schieberstange durch die formschlüssige Verbindung selbst dann erhalten bleibt, wenn es zur Bildung von Rissen im Material der Fixierscheibe kommt. Die Erfindung ist zumindest rissunempfindlicher als der bekannte Plattenschieber. Die voreingestellte Vorspannung des Federelements bleibt erhalten.

Der Begriff "formschlüssige Verbindung" bedeutet, dass der Zusammenhalt der Fixierscheibe und der Schieberstange ohne ständig wirksame Kräfte (Vorspannung) durch die Gestalt der Teile gewährleistet wird. Dies gilt für den zweiseitigen Formschluss, bei dem der Zusammenhalt in zwei axiale Richtungen wirkt, ebenso wie für einen einseitigen Formschluss, bei dem der Zusammenhalt in eine einzige axiale Richtungen wirkt. Im Unterschied zur formschlüssigen Verbindung wird bei der kraftschlüssigen Verbindung der Zusammenhalt der Bauteile durch ständig wirkende (äußere) Kräfte erreicht.

Der erfindungsgemäße Plattenschieber ist bevorzugt ein Doppelplattenschieber. Der erfindungsgemäße Plattenschieber kann auch ein Einplattenschieber sein. Das Fixierelement ist eine mit der Schieberstange formschlüssig verbundene Fixierscheibe, welches sich von dem reibschlüssig verbundenen Klemmelement des Standes der Technik durch einen überraschenderweise deutlich längeren Verbleib an der vorhergesehenen Position auszeichnet. Im Rahmen dieser Erfindung wird der Begriff Fixierscheibe verwendet. Die bevorzugte Form ist die runde Form. Die Fixierscheibe ist jedoch nicht zwangsläufig rund, sie kann beispielsweise auch rechteckig sein.

Bevorzugte Ausführungsformen der Erfindung sind in den Unteransprüchen angegeben.

Die Fixierscheibe umfasst mehrere Scheibensegmente. Besonders bevorzugt handelt es sich um 2 bis 4 Scheibensegmente. Ganz besonders bevorzugt sind die Scheibensegmente formgleich. Dies hat den Vorteil einer einfachen Montage und eines einfachen Austausches von Teilen der Fixierscheibe. Die einzelnen Scheibensegmente können ohne großen Aufwand auf der Schieberstange angebracht oder von dieser entfernt werden. Zum Austausch einzelner Scheibensegmente der Distanzscheibe ist es ausreichend, entsprechende Schrauben zu lösen. Weitere Maßnahmen zur Fixierung der anderen Strukturen müssen nicht getroffen werden.

Bevorzugt umfasst die formschlüssige Verbindung wenigstens eine Nut in der Schieberstange. In diese wenigstens eine Nut greift wenigstens eine Innenkante der Fixierscheibe ein. Hieraus ergibt sich die formschlüssige Verbindung zwischen Schieberstange und Fixierscheibe, die auch bei Bewegung der Schieberstange entlang seiner Achse eine gleichbleibende Positionierung der Fixierscheibe auf der Schieberstange gewährleistet (zweiseitiger Formschluss).

In einer bevorzugten Ausführungsform erstreckt sich eine Nut über den gesamten Umfang der Schieberstange. Mit anderen Worten handelt es sich hierbei um eine vollständig umlaufende Nut. In diese Nut greift wenigstens eine Innenkante der Fixierscheibe ein, woraus die formschlüssige Verbindung zwischen Schieberstange und Fixierscheibe resultiert (zweiseitiger Formschluss). Ein Vorteil dieser Ausführungsform ist die gleichmäßige und materialschonende Kraftverteilung und eine einfachere Fertigung.

In einer anderen Ausführungsform erstreckt sich wenigstens eine Nut über einen Teilumfang der Schieberstange. In einer solchen Ausführungsform greift in jede Nut wenigstens eine Innenkante der Fixierscheibe ein. Somit ergibt sich eine formschlüssige Verbindung zwischen Schieberstange und Fixierscheibe (zweiseitiger Formschluss). Im Sinne einer guten Kraftübertragung und Materialschonung ist bei einer solchen Ausführungsform vor allem die Verwendung mehrerer Nuten vorteilhaft.

In einer anderen Ausführungsform bildet die Schieberstange auf ihrem Umfang wenigstens eine Schulter aus. Mit anderen Worten ist die Schieberstange an einer Stelle verbreitert und bildet dort eine Seitenfläche etwa senkrecht zu der Achse der Schieberstange aus. An dieser Schulter liegt die Fixierscheibe an und ist damit formschlüssig mit der Schieberstange verbunden (einseitiger Formschluss). Die Schulter ist dabei so angeordnet, dass die Fixierscheibe zwischen der Schulter und dem Federelement liegt. Bevorzugt ist die Schulter umlaufend, was die Vorteile einer gleichmäßigen und materialschonenden Kraftverteilung und einer einfacheren Fertigung und Montage birgt.

In einer Ausführungsform weist die Schieberstange zumindest abschnittsweise in Längsrichtung eine Außensechskantform auf, zu welcher die Fixierscheibe komplementär ausgebildet ist. Ein Vorteil ist, dass die Scheibensegmente der Fixierscheibe besonders gut in Umfangsrichtung auf der Schieberstange fixiert sind. Die Außensechskantform kann mit der Nut, bzw. der Schulter kombiniert sein.

In einer Ausführungsform sind die mehreren Scheibensegmente der Fixierscheibe durch wenigstens einen Bolzen miteinander verbunden. Der wenigstens eine Bolzen durchdringt dabei die Schieberstange. Der wenigstens eine, fixierte Bolzen führt einerseits zur Verbindung der Scheibensegmente zu einer Fixierscheibe und andererseits zu einer formschlüssigen Verbindung zwischen der Fixierscheibe und der Schieberstange. Weil diese formschlüssige Verbindung einfach mit weiteren formschlüssigen Verbindungen kombinierbar ist, ergibt sich eine besonders stabile und dauerhafte Verbindung zwischen Fixierscheibe und Schieberstange. Außerdem sind die Scheibensegmente der Fixierscheibe direkt miteinander verbunden, was deren exakte Positionierung besser gewährleistet.

In einer bevorzugten Ausführungsform ist zwischen der Fixierscheibe und dem Federelement eine Anpressplatte angeordnet. Die Anpressplatte dient der gleichmäßigen Kraftübertragung zwischen Fixierscheibe und Federelement. Darüber hinaus ist die Anpressplatte für die schnelle Montage des Plattenschiebers und dessen einfache Wartung wichtig.

Darüber hinaus ist in einer weiteren Ausführungsform wenigstens eine Distanzscheibe zwischen der Fixierscheibe und der Anpressplatte angeordnet. Der Vorteil ist, dass durch die Dicke der Distanzscheibe und oder durch die Anzahl von Distanzscheiben die Vorspannung präzise eingestellt werden kann.

In einer bevorzugten Ausführungsform sind die Anpressplatte und die Fixierscheibe, insbesondere auch die dazwischenliegende Distanzscheibe, axial miteinander verbunden. Besonders bevorzugt erfolgt die Verbindung mittels Schrauben. Diese einfache Verbindung führt zu einer dauerhaften und stabilen Befestigung und einer gleichmäßigen Kraftübertragung auf das Federelement. Gerade bei der Verwendung einer Fixierscheibe und einer Distanzscheibe mit jeweils mehreren Scheibensegmenten ist eine gute Fixierung der einzelnen Segmente wichtig. Gleichzeitig lässt sich die Verschraubung bei Wartungsarbeiten auch schnell wieder lösen.

In einer weiteren bevorzugten Ausführungsform umfasst die Distanzscheibe mehrere, besonders bevorzugt 2 bis 4, Scheibensegmente. Die Scheibensegmente können formgleich sein. Dies birgt den Vorteil einer einfachen Montage und eines einfachen Austauschens verschlissener Teile. Besonders vorteilhaft ist, dass eine Distanzscheibe einer anderen Dicke schnell eingebaut werden kann, um die Vorspannung des Federelements anzupassen.

Vorzugsweise sind die Scheibensegmente der Distanzscheibe und die Scheibensegmente der Fixierscheibe zueinander verdreht. Mit anderen Worten liegen die Trennfugen der Scheibensegmente der Fixierscheibe nicht auf den Trennfugen der Scheibensegmente der Distanzscheibe. Besonders bevorzugt sind die Scheibensegmente so angeordnet, dass die Trennfugen der Scheibensegmente der zwei Scheiben einen möglichst weiten Abstand aufweisen. Das heißt, bei je zwei Scheibensegmenten in Distanzscheibe und Fixierscheibe sind die Scheibensegmente zueinander um etwa 90° verdreht. Bei je drei Scheibensegmenten sind die Scheibensegmente zueinander um etwa 60° und bei je vier Scheibensegmenten um etwa 45° verdreht. Hieraus ist aber nicht ableitbar, dass Distanzscheibe und Fixierscheibe aus der gleichen Anzahl an Scheibensegmenten bestehen müssen. Durch das Verdrehen der Scheibensegmente werden Ungleichmäßigkeiten ausgeglichen und eine gleichmäßige Kraftübertragung gewährleistet.

Vorzugsweise weist die Anpressplatte wenigstens zwei Gabeln auf, die radial nach außen vorstehen. Besonders bevorzugt sind die Gabeln an gegenüberliegenden Seiten in etwa horizontaler Richtung ausgebildet. Während der Montage des Plattenschiebers, während des Austausches einzelner Scheibensegmente der Fixierscheibe oder der Distanzscheibe, oder während des Ersetzens der Distanzscheibe durch eine Scheibe einer anderen Dicke zur Anpassung der Vorspannung des Federelements, kann die Anpressplatte mittels Gabeln fixiert werden. Hierzu wird je eine Gewindestange, welche auf der Seite des Federelements an dem restlichen Plattenschieber fixiert ist, zwischen die beiden Zinken einer Gabel geschoben, und auf der anderen Seite der Anpressplatte mit je einer Mutter fixiert. Dann wird die gewünschte Handlung vorgenommen. Nach dem Anbringen der Distanzscheibe und der Fixierscheibe und deren Befestigung, werden die Muttern gelöst und die Gewindestangen entfernt. Die Gabeln werden also für die Montage, die Wartung oder den Abbau benötigt.

Die Erfindung beruht ferner auf dem Gedanken, ein Fixierelement für einen Plattenschieber anzugeben, bei dem das Fixierelement eine Fixierscheibe mit mehreren Scheibensegmenten umfasst, wobei die Fixierscheibe formschlüssig mit der Schieberstange verbindbar ist.

Das Fixierelement ermöglicht die einfache Montage, bzw. den einfachen Austausch von Einzelteilen, bedingt durch die Verwendung von Scheibensegmenten. Ein weiterer Vorteil ist die formschlüssige Verbindung zur Schieberstange, wodurch die vorgesehen Positionierung auf der Schieberstange, auch bei der Bildung von Rissen, gesichert ist. Zu weiteren Vorteilen des Fixierelements wird auf die obigen Ausführungen verwiesen.

Ebenfalls beruht die Erfindung auf dem Gedanken, einen Plattenschieber zur Verwendung in einer Industrieanlage, insbesondere einer chemischen und petrochemischen Anlage, einer Kohlevergasungsanlage, einer Verbrennungsanlage oder einer Pipeline anzugeben. Zu den Vorteilen dieses Plattenschiebers wird auf die obigen Ausführungen verwiesen.

Zusätzlich beruht die Erfindung auf dem Gedanken, ein Verfahren zur Montage eines Plattenschiebers anzugeben. Zunächst wird die Anpressplatte und das Federelement mit wenigstens zwei Gewindestangen und Muttern fixiert. Dann werden die Scheibensegmente der Distanzscheibe an der Anpressplatte angebracht. Bevorzugt werden dann die Scheibensegmente der Distanzscheibe um die Achse der Schieberstange verdreht. Dies erfolgt besonders bevorzugt um 45-90°. Daraufhin werden die Scheibensegmente der Fixierscheibe an der Distanzscheibe angebracht, wobei die Fixierscheibe formschlüssig mit der Schieberstange verbunden wird. Als nächstes wird die Anpressplatte und die Fixierscheibe verschraubt. Schließlich werden die Muttern und die Gewindestangen von der Anpressplatte entfernt.

Vorteilhaft an dem Verfahren ist, dass ein Plattenschieber erhalten wird, bei dem die vorgesehene Positionierung der Fixierscheibe durch die formschlüssige Verbindung zwischen Fixierscheibe und Schieberstange selbst dann gewährleistet ist, wenn das Material spröde wird und Risse auftreten. Somit ist auch die Kraftübertragung von der Schieberstange auf das Federelement bis zu einem deutlich fortgeschrittenen Grad der Versprödung ausreichend gesichert. Die formschlüssige Verbindung hat sich überraschenderweise als weniger rissempfindlich als die im Stand der Technik verwendete Klemmverbindung erwiesen. Des Weiteren erlaubt das Verfahren eine einfache Montage des Plattenschiebers, eine unkomplizierte Wartung sowie eine unkomplizierte Anpassung der Dicke der Distanzscheibe. Durch das Einspannen des Federelements und der Anpressplatte mit den Gewindestangen, Muttern und den Gabeln, lassen sich problemlos einzelne oder alle Schrauben von Anpressplatte, Distanzscheibe und Fixierscheibe lösen. So lassen sich einzelne oder alle Scheibensegmente einer Scheibe abnehmen und austauschen. Auch kann eine Distanzscheibe mit einer anderen Dicke problemlos eingebaut werden, um die Vorspannung anzupassen. Im Anschluss wird der funktionsfähige Zustand durch erneute Verschraubung und Lösen der Gewindestangen rasch wieder hergestellt.

Die Erfindung wird nachfolgend anhand von Ausführungsbeispielen unter Bezug auf die beigefügten schematischen Zeichnungen näher erläutert.

In diesen zeigen:
- Fig. 1: einen Schnitt eines Plattenschiebers nach einem erfindungsgemäßen Ausführungsbeispiel;
- Fig. 2: ein Detail des Plattenschiebers nach Fig. 1;
- Fig. 3: ein Detail des Plattenschiebers nach Fig. 1 bei der Montage oder Wartung;
- Fig. 4: ein Detail eines weiteren, erfindungsgemäßen Ausführungsbeispiels eines Plattenschiebers mit zwei formschlüssigen Verbindungen zwischen Schieberstange und Fixierscheibe;
- Fig. 5: ein Detail eines weiteren, erfindungsgemäßen Ausführungsbeispiels eines Plattenschiebers mit Schieberstange in Sechskantform;

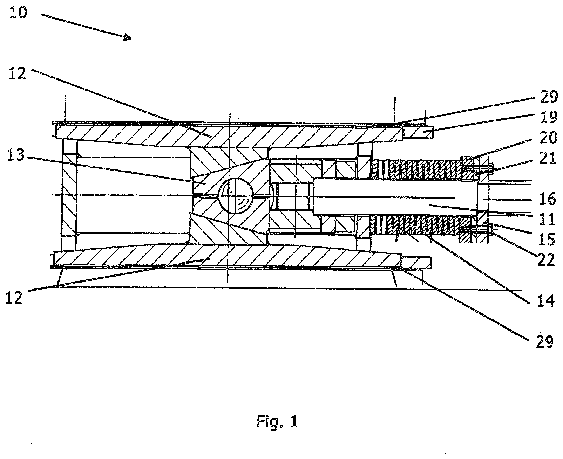

Fig. 1 zeigt einen Plattenschieber 10 mit einem Plattenkorb 19, in welchem zwei Schieberplatten 12 an Dichtsitzen 29 anliegen. Zwischen den Schieberplatten 12 ist ein Anpressorgan 13, beispielsweise eine Keilanordnung angeordnet. Das Anpressorgan 13 ist mit einer Schieberstange 11 verbunden. An der Schieberstange 11 sind ein Federelement 14, in diesem Beispiel ein Tellerfederpaket, eine Anpressplatte 20, eine Distanzscheibe 21 und eine Fixierscheibe 15 angeordnet. Die Fixierscheibe 15 ist formschlüssig über eine vollständig umlaufende Nut 16 mit der Schieberstange 11 verbunden. Die Verbindung zwischen Fixierscheibe 15, Distanzscheibe 21 und Anpressplatte 20 erfolgt mittels Schrauben 22.

Die Schieberstange 11 ist in axialer Richtung bewegbar und treibt bei Betätigung das Anpressorgan 13 gegen die Schieberplatten 12. Somit werden die Schieberplatten 12 in einer Spreizbewegung gegen die Dichtsitze 29 gedrückt, woraus eine gute Dichtwirkung in der Schließstellung des Schiebers resultiert. Das Federelement 14 beaufschlagt das Anpressorgan 13 mit einer Lösekraft. Bei einer Bewegung des Plattenkorbes 19 bringt das Federelement 14 das Anpressorgan 13 in eine Ruhestellung. In der Ruhestellung wird die Spreizwirkung und damit die Anpresskraft, welche die Schieberplatten 12 gegen die Dichtsitze 29 drückt, verringert oder ganz aufgehoben. Hierbei wird das Anpressorgan 13 soweit von den Schieberplatten 12 wegbewegt, dass die Schieberplatten 12 von den Dichtsitzen 29 freikommen. Folglich können die Schieberplatten 12 frei bewegt werden, insbesondere beim Schließvorgang. In der Schließposition wird der Plattenkorb 19 durch die Schieberstange 11 gegen einen Anschlag gepresst (nicht dargestellt). Das Federelement 14 wird komprimiert und die Anpresskraft erzeugt.

Die Kraftübertragung zwischen Schieberstange 11 und Federelement 14 erfolgt über die Fixierscheibe 15, die Distanzscheibe 21 und die Anpressplatte 20. Die Fixierscheibe 15 ist formschlüssig durch eine vollständig umlaufende Nut 16 mit der Schieberstange 11 verbunden, wodurch eine gleichbleibende Positionierung der Fixierscheibe 15 und eine gleichbleibende Vorspannung des Federelements 14 gesichert ist.

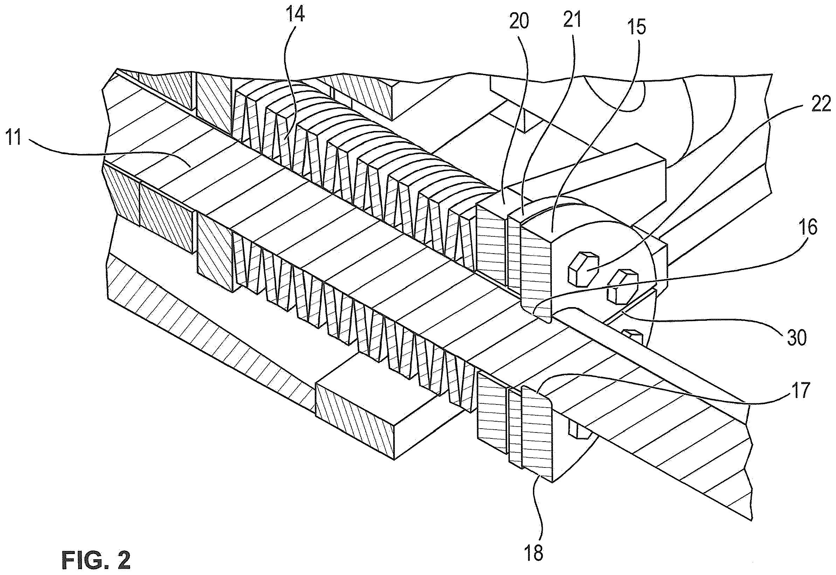

Fig. 2 zeigt die vollständig umlaufende Nut 16 der Schieberstange 11 des obigen Plattenschiebers 10. Die Schieberstange 11 und anliegende Strukturen sind zur Veranschaulichung entlang der Schieberstangenachse geschnitten dargestellt. Bevorzugt und wie in diesem Beispiel dargestellt, verläuft die Nut in einer Ebene senkrecht zu der Achse der Schieberstange. Die Innenkante 17 der Fixierscheibe 15 greift in die vollständig umlaufende Nut 16 und verbindet die beiden Teile formschlüssig. In diesem Beispiel entspricht die Breite der Nut der Dicke der Fixierscheibe 15.

Die Außenkante 18 der Fixierscheibe begrenzt die Fixierscheibe 15 radial nach außen. Die Anpressplatte 20 ist zwischen der Fixierscheibe 15 und dem Federelement 14, einem Tellerfederpaket, angeordnet. Zwischen Fixierscheibe 15 und Anpressplatte 20 befindet sich eine Distanzscheibe 21. Eine Trennfuge 30 lässt erkennen, dass die Fixierscheibe 15 zwei Scheibensegmenten umfasst. Die Distanzscheibe 21 umfasst in diesem Beispiel ebenfalls zwei Scheibensegmente. Die Verbindung zwischen Fixierscheibe 15, Distanzscheibe 21 und Anpressplatte 20 erfolgt mittels Schrauben 22.

Die Fixierscheibe 15, die Distanzscheibe 21 und die Anpressplatte 20 dienen der Kraftübertragung zwischen der Schieberstange 11 und dem Federelement 14. Sie bewirken die Vorspannung des Federelements 14, so dass das Federelement die Lösekraft auf das Anpressorgan 13 erzeugt. Durch die formschlüssige Verbindung der Fixierscheibe ist deren vorgesehene Positionierung, auch bei Materialversprödung, und damit eine gleichbleibende Vorspannung des Federelements 14 gesichert. Durch die Scheibendicke einer ausgewählten Distanzscheibe 21 wird eine präzise Einstellung der Vorspannung des Tellerfederpakets ermöglicht. Die Anpressplatte 20 ermöglicht die gleichmäßige Kraftübertragung auf das Federelement 14. Es besteht die Möglichkeit, Distanzscheiben unterschiedlicher Dicke zur Anpassung der Vorspannung schnell einbauen zu können. Daneben ist es möglich, Scheibensegmente der Fixierscheibe 15 und der Distanzscheibe 21 schnell auszutauschen. Zum Austausch einzelner Scheibensegmente der Distanzscheibe 21 ist es ausreichend, die entsprechenden Schrauben zu lösen. Weitere Maßnahmen zur Fixierung der anderen Strukturen müssen nicht getroffen werden, da das verbleibende Scheibensegment die Distanzscheibe 21, die Anpressplatte 20 und das Federelement 14 weiterhin fixiert. Hieraus ergibt sich ein weiterer Vorteil gegenüber dem Stand der Technik, bei welchem die Entfernung des Klemmelements zum Freiwerden weiterer Teile führt.

Die Erfindung ist allgemein auf ein Fixierelement für einen Plattenschieber anwendbar. Das Fixierelement zeichnet sich dadurch aus, dass es eine Fixierscheibe mit mehreren Scheibensegmenten umfasst, wobei die Fixierscheibe formschlüssig mit der Schieberstange verbindbar ist.

Die Hauptvorteile des Fixierelements sind: Eine einfache Montage, bzw. der einfache Austausch der Fixierscheibe, bedingt durch die Verwendung von Scheibensegmenten. Außerdem eine formschlüssige Verbindung zur Schieberstange, wodurch die vorgesehen Positionierung auf der Schieberstange, auch bei der Bildung von Rissen, gesichert ist. Zu weiteren Vorteilen des Fixierelements wird auf die obigen Ausführungen verwiesen.

Der beschriebene Plattenschieber wird in einer Industrieanlage, insbesondere einer chemischen und petrochemischen Anlage, einer Kohlevergasungsanlage, einer Verbrennungsanlage oder einer Pipeline verwendet. Zu den Vorteilen dieses Plattenschiebers wird auf die obigen Ausführungen verwiesen.

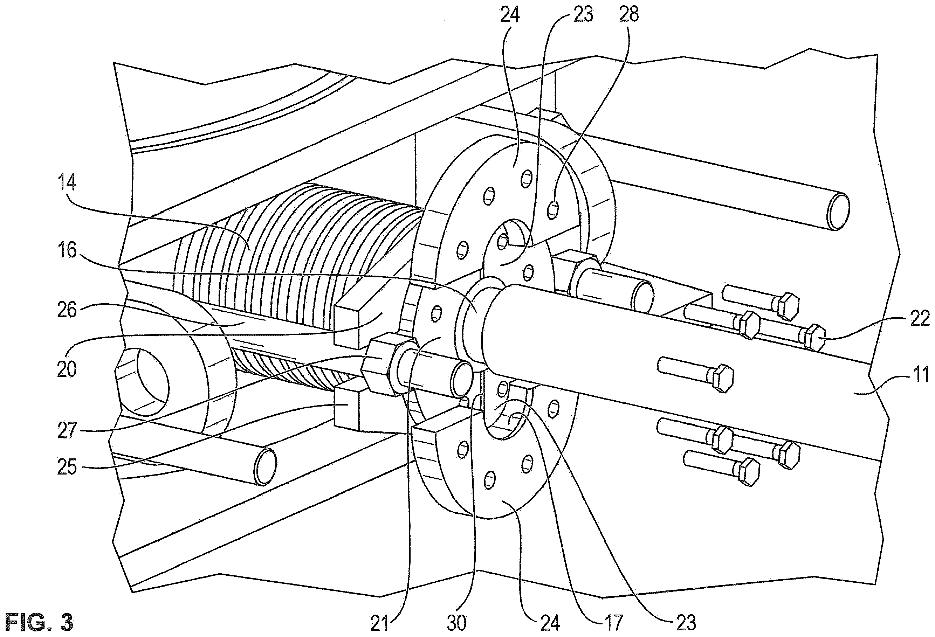

Fig. 3 zeigt die vollständig umlaufende Nut 16 während der Montage oder Wartung des obigen Plattenschiebers 10. Die Fixierscheibe besteht aus zwei Scheibensegmenten 24, welche jeweils vier Durchgangsöffnungen 28 aufweisen. Die Scheibensegmente 24 der Fixierscheibe werden in die vollständig umlaufende Nut 16 eingefügt, woraus die Fixierscheibe und der Formschluss resultieren. Die Anpressplatte 20 bildet zwei Gabeln 25 aus, die horizontal und radial nach außen vorstehen. In diesem Beispiel umfasst die Distanzscheibe zwei Scheibensegmente 23, welche ebenfalls jeweils vier Durchgangsöffnungen aufweisen. Die Scheibensegmente 23 der Distanzscheibe werden von oben und von unten angefügt und dann um 90° um die Achse der Schieberstange gedreht. Die zwei Scheibensegmente 24 der Fixierscheibe werden ebenfalls von oben und unten angefügt, wodurch die Scheibensegmente 24 der Fixierscheibe und die Scheibensegmente 23 der Distanzscheibe zueinander um 90° verdreht sind. Mit anderen Worten liegen die Trennfugen 30 der Scheibensegmente nicht aufeinander.

Nach dem Verdrehen der Scheibensegmente sind die Durchgangsöffnungen 28 von Fixierscheibe und Distanzscheibe jeweils übereinander und in einer Linie mit den Innengewinden der Anpressplatte angeordnet, und die Fixierscheibe, die Distanzscheibe und die Anpressplatte werden mit den Schrauben 22 verschraubt.

Das Federelement 14, ein Tellerfederpaket, ist während der Montage des Plattenschiebers 10 durch die Anpressplatte 20 eingespannt. Dies gelingt durch die Fixierung der Anpressplatte 20 mittels zweier Gewindestangen 26, Muttern 27 und den Gabeln 25 der Anpressplatte 20. Hierbei sind die Gewindestangen auf der Seite des Federelements an weiteren Bauteilen des Plattenschiebers fixiert. Jede Gewindestange wird durch eine Gabel der Anpressplatte geführt und auf der Seite, die dem Federelement abgewandt ist, mit einer Mutter fixiert. Im letzten Schritt der Montage werden die Gewindestangen 25 und die Muttern 27 entfernt.

Wie oben ausführlich beschrieben, ermöglicht dieses Verfahren eine schnelle Montage und einfache Wartung des Plattenschiebers. Das Produkt mit formschlüssiger Verbindung sichert die vorgesehene Anordnung der Fixierscheibe und gewährleistet eine konstante Vorspannung des Federelements.

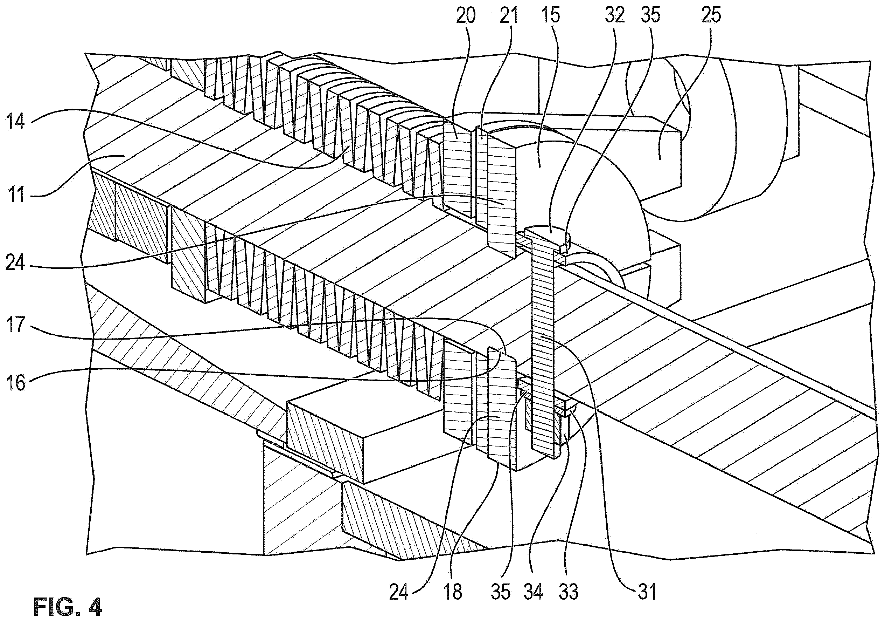

Fig. 4 stellt ein Detail eines weiteren, erfindungsgemäßen Ausführungsbeispiels eines Plattenschiebers dar. In diesem Beispiel werden ein Bolzen 31 und zwei Scheibensegmente 24 verwendet, was die bevorzugte Ausführungsform ist. Also sind die zwei Scheibensegmente 24 der Fixierscheibe 15 durch einen Bolzen 31 miteinander verbunden, wobei der Bolzen 31 die Schieberstange 11 durchdringt. In diesem Beispiel ist der Bolzen 31 ein Bolzen mit Bolzenkopf 32, und wird auf der anderen Seite der Schieberstange 11 mit einer Unterlegscheibe 33 und einer Mutter 34 fixiert. Die Scheibensegmente 24 der Fixierscheibe 15 weisen Auflageflächen 35 für den Bolzenkopf 32, die Unterlegscheibe 33 und die Mutter 34 auf. Bevorzugt und wie in diesem Beispiel gezeigt, stehen die Auflageflächen 35 in axialer Richtung aus den Scheibensegmenten 24 heraus und umgeben die Schieberstange 11. Der fixierte Bolzen 31 schafft eine Verbindung der Scheibensegmente 24 zu einer Fixierscheibe 15 und eine formschlüssige Verbindung zwischen der Fixierscheibe 15 und der Schieberstange 11. Wenn auch nicht zwingend erforderlich, so weist in diesem Beispiel die Fixierscheibe 15 noch eine weitere formschlüssige Verbindung zur Schieberstange 11 auf. Die Fixierscheibe 15 greift mit ihrer Innenkante 17 in eine vollständig umlaufende Nut 16 der Schieberstange 11. Denkbar ist auch eine zweite formschlüssige Verbindung in Form einer Schulter, die auf dem Umfang der der Schieberstange ausgebildet ist, und an der die Fixierscheibe anliegt.

Aus den beiden formschlüssigen Verbindungen in diesem Beispiel ergibt sich neben den allgemein genannten Vorteilen eine besonders stabile und dauerhafte Verbindung zwischen Fixierscheibe 15 und Schieberstange 11. Darüber hinaus sind die Scheibensegmente 24 der Fixierscheibe 15 direkt miteinander verbunden, was deren exakte Positionierung besser gewährleistet.

In den bisher ausgeführten Beispielen ist die Schieberstange 11 rund. Dies soll allerdings keine Limitierung des Schutzbereichs dieser Anmeldung darstellen. Die Schieberstange 11 kann ganz oder abschnittsweise eckig sein oder andere Formen aufweisen. Die Fixierscheibe ist in ihrer Form entsprechend angepasst.

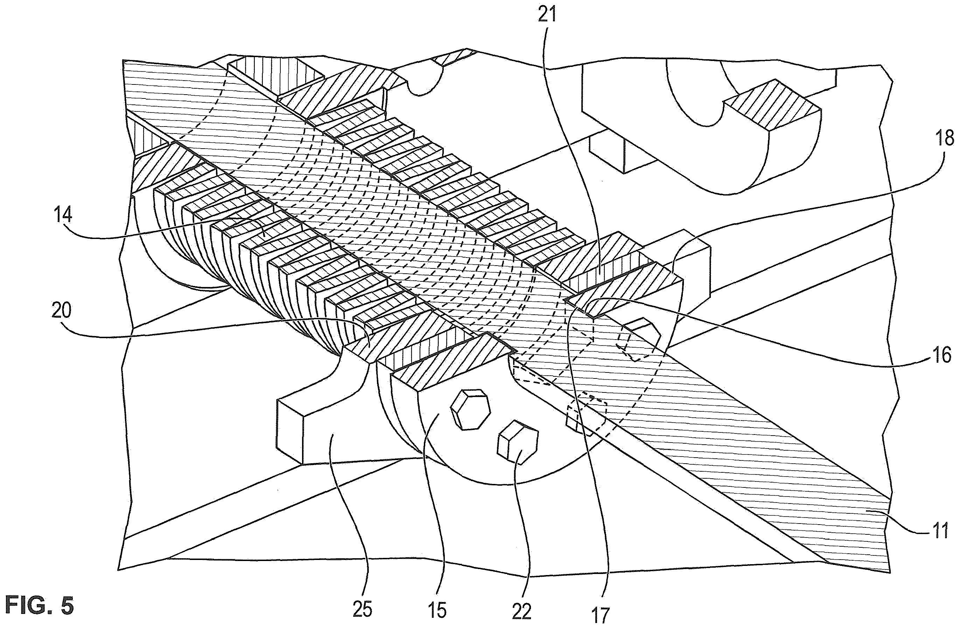

Fig. 5 stellt ein Detail eines weiteren, erfindungsgemäßen Ausführungsbeispiels eines Plattenschiebers dar. Die Schieberstange 11 weist zumindest Abschnittsweise in Längsrichtung eine Außensechskantform auf, zu welcher die Fixierscheibe 15 komplementär ausgebildet ist. Die Außensechskantform erstreckt sich zumindest abschnittsweise, insbesondere vollständig, in Umfangsrichtung der Schieberstange. Mit anderen Worten stellt die Außensechskantform zumindest abschnittsweise die Außenform, bzw. die Außenkontur der Schieberstange dar. Mit nochmals anderen Worten weist die Schieberstange zumindest über einen Abschnitt in Längsrichtung der Schieberstange sechs gleiche Seitenflächen auf, welche sich parallel zur Achse der Schieberstange 11 erstrecken. In diesem Beispiel erstreckt sich die Außensechskantform der Schieberstange 11 in Längsrichtung der Schieberstange 11 über die Breite der Fixierscheibe 15. Die Außensechskantform der Schieberstange 11 kann sich in Längsrichtung der Schieberstange 11 aber auch über die Breite der Fixierscheibe 15 hinaus erstrecken.

### Bezugszeichenliste

- 10: Plattenschieber
- 11: Schieberstange
- 12: Schieberplatte
- 13: Anpressorgan
- 14: Federelement
- 15: Fixierscheibe
- 16: vollständig umlaufende Nut
- 17: Innenkante der Fixierscheibe
- 18: Außenkante der Fixierscheibe
- 19: Plattenkorb
- 20: Anpressplatte
- 21: Distanzscheibe
- 22: Schraube
- 23: Scheibensegment der Distanzscheibe
- 24: Scheibensegment der Fixierscheibe
- 25: Gabel
- 26: Gewindestange
- 27: Mutter
- 28: Durchgangsöffnung
- 29: Dichtsitz
- 30: Trennfuge
- 31: Bolzen
- 32: Bolzenkopf
- 33: Unterlegscheibe
- 34: Mutter
- 35: Auflagefläche

## Patentansprüche

1. Plattenschieber (10) für Industrieanlagen, insbesondere für chemische und petrochemische Anlagen, umfassend eine Schieberstange (11), die in axialer Richtung bewegbar ist, wenigstens eine Schieberplatte (12) zum Verschließen des Plattenschiebers (10), wenigstens ein Anpressorgan (13), das mit der Schieberstange (11) verbunden ist, um die Schieberplatte (12) gegen einen Dichtsitz (29) zu pressen, ein Federelement (14), zur Beaufschlagung des Anpressorgans (13) mit einer Lösekraft, und ein Fixierelement, das auf der Schieberstange (11) zur Kraftübertragung zwischen Schieberstange (11) und Federelement (14) angeordnet ist, wobei das Fixierelement eine Fixierscheibe (15) umfasst, welche die Schieberstange (11) umgibt und formschlüssig mit der Schieberstange (11) verbunden ist,
**dadurch gekennzeichnet, dass**
die Fixierscheibe (15) mehrere Scheibensegmente (24) umfasst.

2. Plattenschieber (10) nach Anspruch 1,
**dadurch gekennzeichnet, dass**
die Fixierscheibe (15) 2 bis 4 Scheibensegmente (24) umfasst.

3. Plattenschieber (10) nach Anspruch 1 oder 2,
**dadurch gekennzeichnet, dass**
die formschlüssige Verbindung wenigstens eine Nut in der Schieberstange (11) umfasst, in die wenigstens eine Innenkante (17) der Fixierscheibe (15) eingreift.

4. Plattenschieber (10) nach Anspruch 3,
**dadurch gekennzeichnet, dass**
sich eine Nut (16) über den gesamten Umfang der Schieberstange (11) erstreckt.

5. Plattenschieber (10) nach Anspruch 3,
**dadurch gekennzeichnet, dass**
sich wenigstens eine Nut über einen Teilumfang der Schieberstange (11) erstreckt.

6. Plattenschieber (10) nach Anspruch 1 oder 2,
**dadurch gekennzeichnet, dass**
die formschlüssige Verbindung wenigstens eine Schulter umfasst, die auf dem Umfang der Schieberstange (11) ausgebildet ist und an der die Fixierscheibe (15) anliegt.

7. Plattenschieber (10) nach einem der vorhergehenden Ansprüche,
**dadurch gekennzeichnet, dass**
die Schieberstange (11) zumindest abschnittsweise in Längsrichtung eine Außensechskantform aufweist, wobei die Fixierscheibe (15) dazu komplementär ausgebildet ist.

8. Plattenschieber (10) nach einem der vorhergehenden Ansprüche,
**dadurch gekennzeichnet, dass**
die mehreren Scheibensegmente (24) der Fixierscheibe (15) durch wenigstens einen Bolzen (31) miteinander verbunden sind, wobei der wenigstens eine Bolzen (31) dabei die Schieberstange (11) durchdringt.

9. Plattenschieber (10) nach einem der vorhergehenden Ansprüche,
**dadurch gekennzeichnet, dass**
eine Anpressplatte (20) zwischen der Fixierscheibe (15) und dem Federelement (14) angeordnet ist.

10. Plattenschieber (10) nach Anspruch 9,
**dadurch gekennzeichnet, dass**
wenigstens eine Distanzscheibe (21) zwischen der Fixierscheibe (15) und der Anpressplatte (20) angeordnet ist.

11. Plattenschieber (10) nach Anspruch 9 oder 10,
**dadurch gekennzeichnet, dass**
die Anpressplatte (20) und die Fixierscheibe (15), insbesondere auch die Distanzscheibe (21), axial miteinander verbunden, insbesondere verschraubt sind.

12. Plattenschieber (10) nach Anspruch 10 oder 11,
**dadurch gekennzeichnet, dass**
die Distanzscheibe (21) mehrere Scheibensegmente, bevorzugt 2 bis 4 Scheibensegmente (23), umfasst.

13. Plattenschieber (10) nach Anspruch 12,
**dadurch gekennzeichnet, dass**
die Scheibensegmente (23) der Distanzscheibe (21) und die Scheibensegmente (24) der Fixierscheibe (15) zueinander verdreht sind.

14. Plattenschieber (10) nach einem der vorhergehenden Ansprüche,
**dadurch gekennzeichnet, dass**
die Anpressplatte (20) wenigstens zwei Gabeln (25) aufweist, die radial nach außen vorstehen.

15. Fixierelement für einen Plattenschieber (10),
**dadurch gekennzeichnet, dass**
das Fixierelement eine Fixierscheibe (15) mit mehreren Scheibensegmenten (24) umfasst, wobei die Fixierscheibe (15) formschlüssig mit der Schieberstange (11) verbindbar ist.

16. Verwendung eines Plattenschiebers (10) nach einem der vorhergehenden Ansprüche in einer Industrieanlage, insbesondere einer chemischen und petrochemischen Anlage, einer Kohlevergasungsanlage, einer Verbrennungsanlage oder einer Pipeline.

17. Verfahren zur Montage eines Plattenschiebers (10) nach einem der vorhergehenden Ansprüche, umfassend folgende Arbeitsschritte:
a) Fixieren der Anpressplatte (20) mittels wenigstens zweier Gewindestangen (26) und Muttern (27) an dem Federelement (14);
b) simultanes Anbringen der Scheibensegmente (23) der Distanzscheibe (21) an der Anpressplatte (20), bevorzugt unter Verdrehen der Scheibensegmente (23) der Distanzscheibe (21) um die Achse der Schieberstange (11), besonders bevorzugt um 45-90°;
c) simultanes Anbringen der Scheibensegmente (24) der Fixierscheibe (15) an der Distanzscheibe (21), wobei die Fixierscheibe (15) formschlüssig mit der Schieberstange (11) verbunden wird;
d) Verschrauben der Anpressplatte (20) mit der Fixierscheibe (15);
e) Entfernen der Muttern (27) und der Gewindestangen (26) von der Anpressplatte (20).

## Claims

1. A gate valve (10) for industrial plants, in particular for chemical and petrochemical plants, the gate valve comprising a slide rod (11) movable in an axial direction, at least one slide plate (12) for closing the gate valve (10), at least one pressing member (13) connected to the slide rod (11) to press the slide plate (12) against a sealing seat (29), a spring element (14) for acting on the pressing member (13) with a releasing force, and a fixing element arranged on the slide rod (11) and configured for transmitting power between the slide rod (11) and spring element (14), wherein the fixing element comprises a fixing disc (15), which surrounds the slide rod (11) and is interlockingly connected to the slide rod (11),
**characterised in that**
the fixing disc (15) comprises a plurality of disc segments (24).

2. The gate valve (10) according to claim 1,
**characterised in that**
the fixing disc (15) comprises 2 to 4 disc segments (24).

3. The gate valve (10) according to claim 1 or 2,
**characterised in that**
the interlocking connection comprises at least one groove in the slide rod (11), into which groove at least one inner edge (17) of the fixing disc (15) engages.

4. The gate valve (10) according to claim 3,
**characterised in that**
a groove (16) extends over the entire circumference of the slide rod (11).

5. The gate valve (10) according to claim 3,
**characterised in that**
at least one groove extends over a partial circumference of the slide rod (11).

6. The gate valve (10) according to claim 1 or 2,
**characterised in that**
the interlocking connection comprises at least one shoulder which is formed on the circumference of the slide rod (11) and against which the fixing disc (15) rests.

7. The gate valve (10) according to any one of the preceding claims,
**characterised in that**
the slide rod (11) has an external hexagonal shape at least in some sections in the longitudinal direction, the fixing disc (15) being designed to be complementary to said external shape of the slide rod.

8. The gate valve (10) according to any one of the preceding claims,
**characterised in that**
the plurality of disc segments (24) of the fixing disc (15) are interconnected by at least one bolt (31), the at least one bolt (31) penetrating the slide rod (11).

9. The gate valve (10) according to any one of the preceding claims,
**characterised in that**
a pressure plate (20) is arranged between the fixing disc (15) and the spring element (14).

10. The gate valve (10) according to claim 9,
**characterised in that**
at least one spacer disc (21) is arranged between the fixing disc (15) and the pressure plate (20).

11. The gate valve (10) according to claim 9 or 10,
**characterised in that**
the pressure plate (20) and the fixing disc (15), in particular also the spacer disc (21), are axially connected to each other, in particular screwed together.

12. The gate valve (10) according to claim 10 or 11,
**characterised in that**
the spacer disc (21) comprises a plurality of disc segments, preferably 2 to 4 disc segments (23).

13. The gate valve (10) according to claim 12,
**characterised in that**
the disc segments (23) of the spacer disc (21) and the disc segments (24) of the fixing disc (15) are rotated relative to each other.

14. The gate valve (10) according to any one of the preceding claims,
**characterised in that**
the pressure plate (20) has at least two forks (25) which protrude radially outwards.

15. A fixing element for a gate valve (10),
**characterised in that**
the fixing element comprises a fixing disc (15) with a plurality of disc segments (24), the fixing disc (15) being interlockingly connectable to the slide rod (11).

16. Use of a gate valve (10) according to any one of the preceding claims in an industrial plant, in particular a chemical and petrochemical plant, a coal gasification plant, an incinerator, or a pipeline.

17. A method for assembling a gate valve (10) according to any one of the preceding claims, the method comprising the following steps:
a) fixing the pressure plate (20) to the spring element (14) by means of at least two threaded rods (26) and nuts (27);
b) simultaneously fitting the disc segments (23) of the spacer disc (21) on the pressure plate (20), preferably with rotation of the disc segments (23) of the spacer disc (21) about the axis of the slide rod (11), particularly preferably by 45-90°;
c) simultaneously fitting the disc segments (24) of the fixing disc (15) on the spacer disc (21), the fixing disc (15) being interlockingly connected to the slide rod (11);
d) screwing the pressure plate (20) to the fixing disc (15); and
e) removing the nuts (27) and the threaded rods (26) from the pressure plate (20).

## Revendications

1. Vanne à guillotine (10), destinée à des installations industrielles, notamment à des installations chimiques et pétrochimiques, comprenant une tige coulissante (11), qui est mobile en direction axiale, au moins une plaque coulissante (12), destinée à fermer la vanne à guillotine (10), au moins un organe de pression (13), qui est relié avec la tige coulissante (11), pour presser la plaque coulissante (12) contre un siège d'étanchéité (29), un élément à ressort (14), destiné à contraindre l'organe de pression (13) par une force de désolidarisation, et un élément de fixation, qui est placé sur la tige coulissante (11), pour la transmission de force entre la tige coulissante (11) et l'élément à ressort (14), l'élément de fixation comprenant une rondelle de fixation (15), laquelle entoure la tige coulissante (11) et est assemblée par complémentarité de forme avec la tige coulissante (11),
**caractérisée en ce que**
la rondelle de fixation (15) comprend plusieurs segments de rondelle (24).

2. Vanne à guillotine (10) selon la revendication 1,
**caractérisée en ce que**
la rondelle de fixation (15) comprend de 2 à 4 segments de rondelle (24).

3. Vanne à guillotine (10) selon la revendication 1 ou 2,
**caractérisée en ce que**
l'assemblage par complémentarité de forme comprend au moins une rainure dans la tige coulissante (11), dans laquelle s'engage au moins une arête interne (17) de la rondelle de fixation (15).

4. Vanne à guillotine (10) selon la revendication 3,
**caractérisée**
**en ce qu'**une rainure (16) s'étend sur l'ensemble de la périphérie de la tige coulissante (11).

5. Vanne à guillotine (10) selon la revendication 3,
**caractérisée**
**en ce qu'**au moins une rainure s'étend sur une périphérie partielle de la tige coulissante (11).

6. Vanne à guillotine (10) selon la revendication 1 ou 2,
**caractérisée en ce que**
l'assemblage par complémentarité de forme comprend au moins un épaulement qui est conçu sur la périphérie de la tige coulissante (11) et qui est adjacent à la rondelle de fixation (15).

7. Vanne à guillotine (10) selon l'une quelconque des revendications précédentes,
**caractérisée en ce que**
la tige coulissante (11) comporte au moins par endroits dans la direction longitudinale une forme hexagonale mâle, la rondelle de fixation (15) étant conçue en complémentarité de celle-ci.

8. Vanne à guillotine (10) selon l'une quelconque des revendications précédentes,
**caractérisée en ce que**
les plusieurs segments de rondelle (24) de la rondelle de fixation (15) sont assemblés les uns aux autres par au moins un boulon (31), l'au moins un boulon (31) traversant à cet effet la tige coulissante (11).

9. Vanne à guillotine (10) selon l'une quelconque des revendications précédentes,
**caractérisée**
**en ce qu'**une plaque de pression (20) est placée entre la rondelle de fixation (15) et l'élément à ressort (14).

10. Vanne à guillotine (10) selon la revendication 9,
**caractérisée**
**en ce qu'**au moins une rondelle d'écartement (21) est placée entre la rondelle de fixation (15) et la plaque de pression (20).

11. Vanne à guillotine (10) selon la revendication 9 ou 10,
**caractérisée en ce que**
la plaque de pression (20) et la rondelle de fixation (15), notamment aussi la rondelle d'écartement (21), sont assemblées, notamment vissées les unes aux autres en direction axiale.

12. Vanne à guillotine (10) selon la revendication 10 ou 11,
**caractérisée en ce que**
la rondelle d'écartement (21) comprend plusieurs segments de rondelle, de préférence de 2 à 4 segments de rondelle (23).

13. Vanne à guillotine (10) selon la revendication 12,
**caractérisée en ce que**
les segments de rondelle (23) de la rondelle d'écartement (21) et les segments de rondelle (24) de la rondelle de fixation (15) sont tournés les uns par rapport aux autres.

14. Vanne à guillotine (10) selon l'une quelconque des revendications précédentes,
**caractérisée en ce que**
la plaque de pression (20) comporte au moins deux fourches (25), qui débordent en direction radiale vers l'extérieur.

15. Elément de fixation d'une vanne à guillotine (10),
**caractérisée en ce que**
l'élément de fixation comprend une rondelle de fixation (15) pourvue de plusieurs segments de rondelle (24), la rondelle de fixation (15) étant susceptible d'être assemblée par complémentarité de forme avec la tige coulissante (11).

16. Utilisation d'une vanne à guillotine (10) selon l'une quelconque des revendications précédentes dans une installation industrielle, notamment dans une installation chimique et pétrochimique, dans une installation de gazéification de charbon, dans un incinérateur ou dans un pipeline.

17. Procédé, destiné au montage d'une vanne à guillotines (10) selon l'une quelconque des revendications précédentes, comprenant les étapes de travail suivantes, consistant à :
a) fixer la plaque de pression (20) au moyen d'au moins deux tiges filetées (26) et écrous (27) sur l'élément à ressort (14) ;
b) monter simultanément les segments de rondelle (23) de la rondelle d'écartement (21) sur la plaque de pression (20), de préférence en faisant tourner les segments de rondelle (23) de la rondelle d'écartement (21) autour de l'axe de la tige coulissante (11), de manière particulièrement préférentielle de 45 à 90° ;
c) monter simultanément les segments de rondelle (24) de la rondelle de fixation (15) sur la rondelle d'écartement (21), la rondelle de fixation (15) étant assemblée par complémentarité de forme avec la tige coulissante (11) ;
d) visser la plaque de pression (20) avec la rondelle de fixation (15) ;
e) retirer les écrous (27) et les tiges filetées (26) de la plaque de pression (20).
